# EUROPEAN PATENT SPECIFICATION

(11) **EP 0 635 552 B1**
(45) Date of publication and mention of the grant of the patent: **01.04.1998**
(21) Application number: 94304435.4
(22) Date of filing: 20.06.1994
(51) Int. Cl.: C09D 115/00, C09D 5/02

(54) **Coating compositions**
Beschichtungsmischungen
Compositions de revêtement

(30) Priority: 22.07.1993 GB 9315156
(43) Date of publication of application: 25.01.1995
(73) Proprietor: IMPERIAL CHEMICAL INDUSTRIES PLC, London SW1P 3JF (GB)
(72) Inventor: Taylor, Philip Louis, Burnham, Bucks. SL1 7LT (GB)
(74) Representative: Cooper, Alan Victor

(56) References cited:
- US-A- 3 243 401
- DATABASE WPI Section Ch, Week 7917, Derwent Publications Ltd., London, GB; Class A, AN 79-32543B & JP-A-54 036 340 (ASAHI ELECTROCHEM IND KK) 17 March 1979

## Description

This invention relates to a water-borne coating composition containing as one component an epoxidised natural rubber, to the preparation of such a composition and to its use.

Natural rubber latex was used as a component in oil-based paints and in water-based distempers in the 1930's. The compositions current at that time are extensively reviewed in "The Chemistry and Technology of Rubber Latex" C. Falconer Flint 581-590, Chapman & Hall Ltd London 1938. Although such paints were apparently to be found on the market, it is known that they suffered from substantial disadvantages in their stability, consistency, and brushing characteristics. Moreover, the paint films which they form suffered particular disadvantages in that they underwent severe yellowing and embrittlement as a result of oxidated degradation. Further, the coatings tended to peel and show low resistance to damage from mechanical impact.

Accordingly these early compositions failed to achieve sustained commercial application.

Although a later publication "Latex in Industry" 2nd Edition R.J. Nobel 689-692 Rubber Age New York 1953 reported a resurgence of interest in rubber latex-based paints, this was short-lived. Rubber latex systems had been totally eclipsed by the advent of polybutadiene and butadiene-styrene systems developed in the 1940's and acrylic latexes developed from the 1950's onwards. In short, there has been effectively no interest in natural rubber-based paint latexes over the past four decades.

We have now found that when epoxidised natural rubber is used as a component in coating compositions, certain surprising and unexpected benefits are obtained. For example, as compared with rubber latex-based coatings, the films are relatively resistant to yellowing and embrittlement. Moreover, films are tough and resistant to mechanical damage. As compared with coatings based on the most up-to-date acrylic latex systems, the epoxidised natural rubber systems produce coating films which are equally mechanically durable but are far more tenacious in their adhesion to substrate surfaces. Hence, in contrast to acrylic-based paint systems they can be used as a film-former in a coating composition without the need for an adhesion promoter.

US-A-3 243 401 is concerned with latexes of epoxidised conjugated diene polymers having an epoxy equivalent weight of 2000 to 200. The epoxidised polymers illustrated in the Examples are synthetic copolymers. The latexes have many uses as binders in paper and fabric production and processing. In use these binders need to be cured with a cross-linking agent, in particular a urea formaldehyde derivative.

Certain epoxidised rubber derivatives are known. A particularly effective process for their preparation has been described in GB-A-2 113 692. They are used substantially exclusively as raw materials for vulcanisation and hence for the manufacture of hard rubber goods such as rubber seals and tyres. Their use as a component in water-borne paints is unknown.

In the present context the term "rubber" in the phrase "epoxidised natural rubber" is used to mean rubber latex as found in nature.

Accordingly, the present invention provides a water-borne coating composition containing as one component a latex of an epoxidised natural rubber.

The degree of epoxidation of the rubber is at least 50% of the theoretical maximum number of double bonds available for epoxidation. In practice, the maximum level of epoxidation will not usually exceed 90%. Examples of upper limits of epoxidation are 60%, 70% and 75% of the theoretical maximum. The percentage of epoxidation referred to here is as defined in GB-A-2 113 692.

The function that the epoxidised natural rubber performs in the paint depends upon the proportion that it makes up of the total binder solids content of the composition. At lower levels, for example 15% by weight or more (up to 20% or up to 25% by weight), the resins are surprisingly touch dry even though the epoxidised natural rubber has a low minimum film forming temperature (MFT). At higher levels, for example 50% by weight of total binder solids, the films formed have tenaceous adhesion.

The paints prepared according to this invention will in general be formulated with another resin as part of the total film-former.

Standard film-forming resins for use in the present invention are generally stable dispersions of polymer particles in water.

Examples of classes of such polymers are polyacrylate and polymethacrylate polymers and co-polymers and polyvinyl esters and co-polymers and styrene and butadiene co-polymers.

Examples of polyacrylates are polymers of C₁-₈ alkyl esters of acrylic and methacrylic acid. Examples of such acrylate esters are methyl acrylate, ethyl acrylate, butyl acrylate, hexyl acrylate, 2-ethylhexyl acrylate and octyl acrylate.

Examples of such methacrylate esters are methyl methacrylate, ethyl methacrylate butyl methacrylate and hexyl methacrylate.

Examples of vinyl esters are vinyl C₁-₂₀ alkanoic acid esters, particularly, vinyl acetate, vinyl propionate and "vinyl versatate". Vinyl versatate is the trade name for a mixture of vinyl esters where the alkanoic acid component is derived from a mixture of branched chain acids containing on average 10 carbon atoms per alkyl unit.

The co-polymers that can be used as primary film-formers can be co-polymers based on two or more of the acrylate, methacrylate or vinyl ester monomers referred to above.

Alternatively the co-polymers can be formed with or include other co-monomers, for example free carboxylic acids, hydroxy esters, di-functional esters and/or hydrocarbons. Examples of such free acids are acrylic, methacrylic maleic and fumaric acids.

Examples of hydroxy esters are hydroxy C₂-₆ alkyl acrylates and methacrylates, especially 2-hydroxy ethyl acrylate and methacrylate, 3-hydroxy propyl acrylate and methacrylate, 3-hydroxyprop-2-yl acrylate and 4-hydroxy butyl methacrylate.

Examples of difunctional esters are C₁-₈ alkyl maleates and fumarates, particularly dimethyl and diethyl maleate and fumarate.

Examples of hydrocarbons are styrene and optionally substituted styrenes.

The precise composition of the polymer or co-polymer will depend upon the particular physical characteristics (especially glass transition temperature) that the polymer is required to exhibit. An appropriate composition can be derived by standard techniques.

At levels 15% by weight of total binder solids the epoxidised natural rubber begins to behave as part of the film-former. Examples of other levels at which the epoxidised natural rubber contributes to film formation are 20%, 25% and 30%. At levels of 50% by weight it will tend to determine the characteristics of the film. The greater the difference in hardness between the epoxidised natural rubber and any other film-former the more pronounced is the extent of this determination when this effect begins to take place. The proportion of the epoxidised natural rubber can be increased until it constitutes the entire film-forming component of the composition.

The level of epoxidation has an impact on the physical properties of the epoxidised natural rubber and in particular its glass transition temperature (Tg). The Tg of the derivative is a property that has to be taken into more careful consideration when the derivative is employed as a film-former than when it is being used as an adhesion promoter. The Tg of epoxidised natural rubber is less than 20°C. Natural rubber with 75% epoxidation has a Tg of 10°C and below. Natural rubber with 65% epoxidation has a Tg of -10°C and below.

One particular benefit of using epoxidised natural rubber as a film-former is that coating compositions can be produced which have relatively low MFT's, often below -8°C. The MFT is the minimum temperature at which a resin system forms a film. It is measured according to ASTMP test 2354-91. MFT differs from Tg in that Tg is a fundamental characteristic of a polymer, whereas MFT is a characteristic of the paint or resin system. It is effected by the make-up of the resin blend and the presence or absence of co-solvent.

Resin systems based on epoxidised natural rubbers have the advantage that generally low MFT's can be achieved without the need to use co-solvent. Yet the films formed are hard, durable and display excellent adhesion to substrate.

The compositions of the present invention can be produced by standard methods, for example by blending the epoxidised natural rubber in the form of a latex with other components that are standard for coating compositions.

Components standard for paint compositions are pigments (especially in the form of a mill-base), extenders, dispersants and film-formers.

The coating composition is made by standard mixing and blending techniques.

The epoxidised rubber latex can be made using or by analogy with known processes as described for example in GB-A-2 113 692 and Ind Eng Chem Res 1991 30 2573-76.

The natural rubber itself is known and can be obtained by tapping from plants.

The waterborne coating composition of the present invention is used to form protective or decorative coatings on substrates, for example the exterior or interior of buildings, engineering and architectural structures, land and water-based vehicles and aircraft.

The composition can be applied by conventional techniques, for example brushing, dipping, spraying, roll-coating and curtain coating. The resultant film drys at ambient temperature to form a tough durable coating which has excellent adhesion to substrates and is resistant to weathering and embrittlement.

The following Examples illustrate the invention.

### EXAMPLE 1: Preparation of coating compositions.

### MILLBASE

A dispersion vessel was loaded with 280.8g water, 10.4g pigment dispersant DISPEX GA40 and 0.6g anti-foam agent DISPELAIR CF 246 and the contents were mixed for 5 minutes. To the mixture was slowly added 1137.5g Ti0₂ (RUTILE Ti0₂ TIOXIDE TR 92) over 10 minutes. There was then added 90.8g water and the mixture was dispersed for 15 minutes. Finally, there was added 1.6g In-Can Preservative METACIDE 300 and 78.3g water and the mixture was stirred for a further 20 minutes.

### PAINT

25g of millbase was mixed with 3.2g styrene-acrylic dispersion ROPAQUE OP-62LOE.

The following latex formulations were prepared:
(1) 36.5g ENR∗ latex (65% epoxidation), 0.2g anti-foam agent DISPELAIR CF246.
(2) 36.5g ENR∗ latex (50% epoxidation), 0.2g anti-foam Agent DISPELAIR CF 246.
(3) 36.5g ENR∗∗ latex (65% epoxidation), 0.2g anti-foam agent DISPELAIR CF246.
(4) 1.4g water, 21.9g acrylic latex solution, 14.6g water, 0.2g anti-foam agent DISPELAIR CF246.

Latex formulations (1), (2), (3) and (4) were added to respective millbase/styrene-acrylic dispersion mixtures to form sample Nos. (A), (B), (C) and (D). Sample No. (D) which contains a standard acrylic latex was used as a control.
ENR∗ = epoxidised natural rubber according to GB-A-2 113 692
ENR∗∗= epoxidised natural rubber according to GB-A-2 113 692 with modified catalyst.

### EXAMPLE 2:

This Example compares the properties of a film formed from an ENR latex with a film formed from a standard acrylic latex and also demonstrates the effect of the degree of epoxidation of a natural rubber latex on the properties of the film. The samples prepared according to Example 1 were used except that in Table 1 the samples were clear films prepared without pigment (Ti0₂).

**TABLE 1**

| Sample | MFT°C | Yellowing (ΔB) (1 Month, 70°C, dark) | Tack-free at 1 hr | Water Spot at 24 hrs |
|---|---|---|---|---|
| A | 0 | 5.1 | Yes | Good |
| B | <-8 | 10.3 | Yes/No | Good |
| C | <-8 | 8.7 | Yes | Good |
| D | -3 | 0.8 | No | Good |

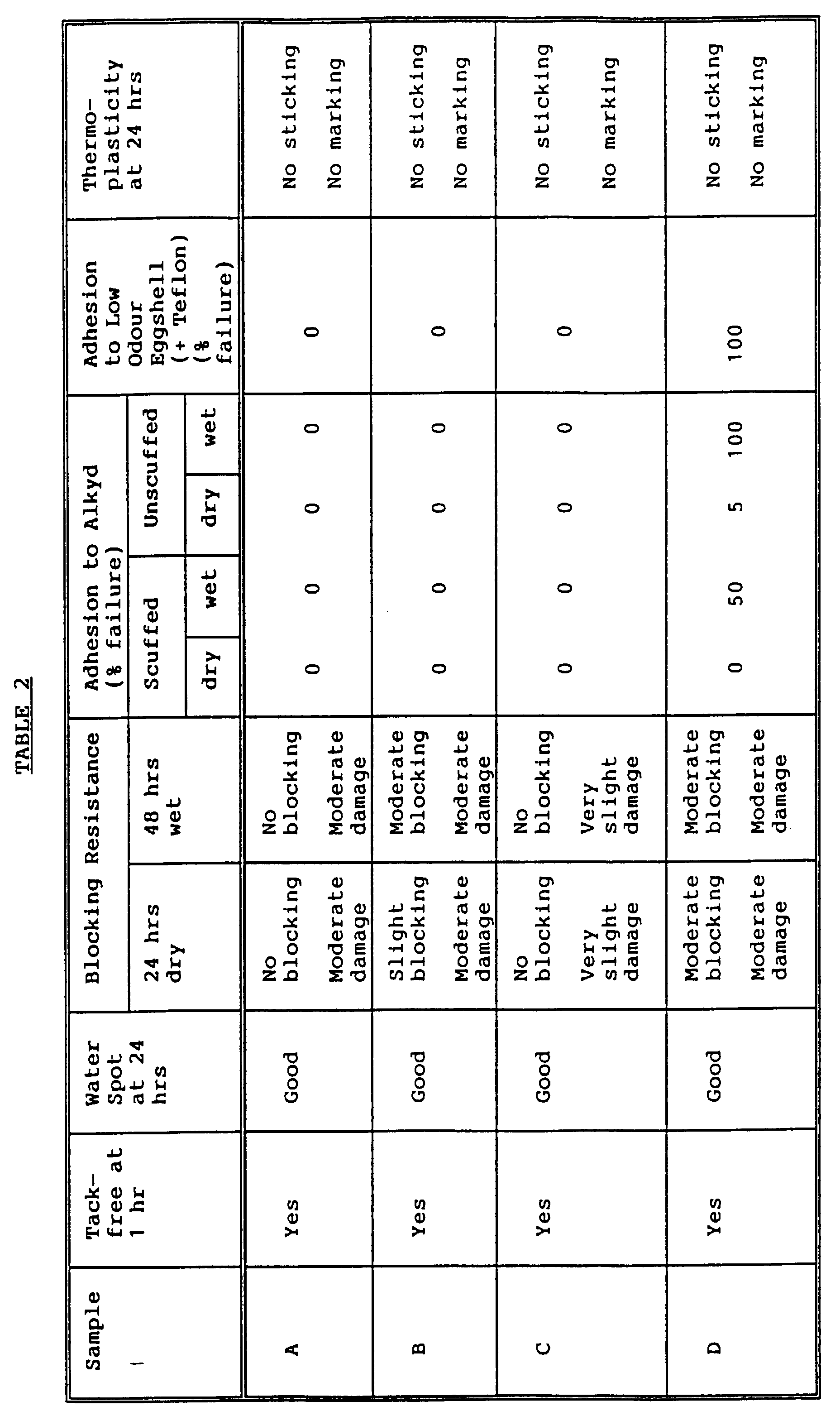

The results show in Tables 1 and 2 that films formed from ENR latexes have excellent adhesion, are tackfree at 1 hour and have good water spot and blocking resistance. Moreover, accelerated ageing of films showed no evidence of embrittlement or excessive yellowing, there is efficient film formation down to a temperature of -8°C and films are not thermoplastic when subjected to a temperature of 70°C for 24 hours.

### COMPARATIVE EXAMPLE

Example 2 of US-A-3 243 401 was repeated exactly as described but replacing palmitic ethoxylate with ocenol ethoxylate, this being more readily commercially available, and yielded an epoxidised latex having an oxirane content of 2.24% (reported value 2.03%).

The relative adhesion properties of the latex prepared according to US-A-3 243 401 was compared with that of an epoxidised natural rubber latex according to the present invention. One sample of latex according to the present invention was coated on to unscuffed aged alkyd film on a wood substrate. Two portions of latex according to Example 2 of US-A-3 243 401 were coated on to two identical aged alkyd films on a wood substrate. One of these samples was cured using commercial urea formaldehyde (BEETLE 610) as described in US-A-3 243 401, the other was uncured.

The results of the adhesion tests are shown in Table 3.

**TABLE 3**

| Adhesion to Alkyd | | | |
|---|---|---|---|
| | Latex 1 | Latex 2 | Latex 2 Cured |
| Dry | 0% | 30% | 0% |
| Wet | 0% | 80% | 0% |

The results are expressed as % adhesion failure.

Latex 1 is latex according to the present invention. Latex 2 is latex according to US-A-3 243 401.

Latex 2 (unlike Latex 1) remains tacky even after 24 hours and requires curing with urea formaldehyde to form a proper paint film.

## Claims

1. A water-borne coating composition suitable for use in forming a protective or decorative coating on a surface of a building at ambient temperatures in which one component of the composition is an epoxidised natural rubber characterised in that the epoxidised natural rubber has
a) a degree of epoxidation of at least 50 % of the theoretical maximum number of double bonds available for epoxidation in the natural rubber, and
b) a glass transition temperature (Tg) of less than 20°C.

2. A composition as claimed in Claim 1 characterised in that the epoxidised natural rubber has a Tg of less than 0°C.

3. A composition as claimed in Claim 1 or Claim 2 wherein the composition has a minimum film-forming temperature of below -8°C.

4. A composition as claimed in any one of the preceding Claims, wherein the composition is without co-solvent for the water.

5. A composition according to any one of the preceding Claims characterised in that the composition also contains a film-forming resin selected from the group of standard film-forming resins consisting of acrylate polymers and co-polymers, methacrylate polymers and co-polymers, vinyl ester polymers and co-polymers and co-polymers of styrene and butadiene.

6. A composition as claimed in any one of the preceding Claims characterised in that the composition additionally contains a component selected from the group consisting of pigments and extenders.

## Patentansprüche

1. Wasserverdünnbare Beschichtungszusammensetzung, die sich zur Bildung einer Schutz- oder Dekorationsbeschichtung auf einer Oberfläche eines Gebäudes bei Umgebungstemperaturen eignet, in der ein Bestandteil der Zusammensetzung ein epoxidierter Naturkautschuk ist,
dadurch **gekennzeichnet**, daß
der epoxidierte Naturkautschuk
a) einen Epoxidierungsgrad von mindestens 50 % der theoretischen maximalen Anzahl der zur Epoxidierung in dem natürlichem Kautschuk verfügbaren Doppelbindungen und
b) eine Glasübergangstemperatur (Tg) von niedriger als 20°C hat.

2. Zusammensetzung nach Anspruch 1,
dadurch **gekennzeichnet**, daß
der epoxidierte Naturkautschuk eine Tg von niedriger als 0°C hat.

3. Zusammensetzung nach Anspruch 1 oder 2, wobei die Zusammensetzung eine minimale Filmbildungstemperatur von unterhalb -8°C hat.

4. Zusammensetzung nach einem der vorhergehenden Ansprüche, wobei die Zusammensetzung ohne Co-Lösungsmittel für das Wasser ist.

5. Zusammensetzung nach einem der vorhergehenden Ansprüche,
dadurch **gekennzeichnet**, daß
die Zusammensetzung außerdem ein filmbildendes Harz enthält, das aus der aus Acrylat-Polymeren und -Copolymeren, Methacrylat-Polymeren und -Copolymeren, Vinylester-Polymeren und -Copolymeren und Copolymeren von Styrol und Butadien bestehenden Gruppe von filmbildenden Standardharzen ausgewählt ist.

6. Zusammensetzung nach einem der vorhergehenden Ansprüche,
dadurch **gekennzeichnet**, daß
die Zusammensetzung außerdem einen Bestandteil enthält, der aus der aus Pigmenten und Streckmitteln bestehenden Gruppe ausgewählt ist.

## Revendications

1. Composition aqueuse de revêtement apte à l'utilisation dans la formation d'un revêtement protecteur ou décoratif sur une surface d'un bâtiment aux températures ambiantes, un constituant de la composition étant un caoutchouc naturel époxydé, caractérisée en ce que le caoutchouc naturel époxydé a
a) un degré d'époxydation égal à au moins 50 % du nombre maximal théorique de doubles liaisons disponibles pour l'époxydation dans le caoutchouc naturel, et
b) une température de transition vitreuse (Tg) inférieure à 20°C.

2. Composition suivant la revendication 1, caractérisée en ce que le caoutchouc naturel époxydé a une Tg inférieure à 0°C.

3. Composition suivant la revendication 1 ou la revendication 2, qui a une température filmogène minimale inférieure à -8°C.

4. Composition suivant l'une quelconque des revendications précédentes, qui est dépourvue de co-solvant pour l'eau.

5. Composition suivant l'une quelconque des revendications précédentes, caractérisée en ce qu'elle contient également une résine filmogène choisie dans le groupe de résines filmogènes classiques consistant en polymères et copolymères d'acrylates, polymères et copolymères de méthacrylate, polymères et copolymères d'esters vinyliques et copolymères de styrène et de butadiène.

6. Composition suivant l'une quelconque des revendications précédentes, caractérisée en ce qu'elle contient en outre un constituant choisi dans le groupe consistant en pigments et diluants.
